# EUROPEAN PATENT APPLICATION

(11) **EP 4 835 655 A1**
(43) Date of publication of application: **04.11.2026**
(21) Application number: 24910897.8
(22) Date of filing: 18.12.2024
(51) Int. Cl.: G06F 9/451

(54) **INTERACTION METHOD AND APPARATUS, DEVICE, AND STORAGE MEDIUM**

(30) Priority: 25.12.2023 CN 202311801561
(71) Applicant: Beijing Zitiao Network Technology Co., Ltd., Beijing 100190 (CN)
(72) Inventor: ZHOU, Zijun, Beijing 100028 (CN); ZHANG, Tiantian, Beijing 100028 (CN); CHI, Cheng, Beijing 100028 (CN)
(74) Representative: Marks & Clerk LLP
(86) International application number: PCT/CN2024/140423
(87) International publication number: WO 2025/139966

(57) **Abstract**

Embodiments of the disclosure relate to a method, an apparatus, a device, and a storage medium for interaction. The method provided herein includes: presenting an interactive interface for a virtual object based on an interaction request associated with a target object, the virtual object corresponding to the target object, and the interactive interface being configured to provide a multimodal interaction where participants are a current user and the target object; and presenting a second message from the virtual object in the interactive interface based on a first message from the current user, where the second message is generated based on reference information associated with the target object.

## Description

The present application claims priority to Chinese Patent Application No. 202311801561.7, filed on December 25, 2023, and entitled "METHOD, APPARATUS, DEVICE, AND STORAGE MEDIUM FOR INTERACTION", which is incorporated herein by reference in its entirety.

### FIELD

Example embodiments of the present disclosure generally relate to the field of computers, and in particular, to a method, an apparatus, a device, and a computer-readable storage medium for interaction.

### BACKGROUND

With the development of computer technologies, the Internet has become an important platform for people to exchange information. For example, people may share various creations through the platform, and may also obtain works shared by other users.

### SUMMARY

In a first aspect of the present disclosure, a method for interaction is provided. The method includes: presenting an interactive interface for a virtual object based on an interaction request associated with a target object, the virtual object corresponding to the target object, and the interactive interface being configured to provide a multimodal interaction where participants are a current user and the target object; and presenting a second message from the virtual object in the interactive interface based on a first message from the current user, where the second message is generated based on reference information associated with the target object.

In a second aspect of the present disclosure, an apparatus for interaction is provided. The apparatus includes: an interface presenting module configured to present an interactive interface for a virtual object based on an interaction request associated with a target object, the virtual object corresponding to the target object, and the interactive interface being configured to provide a multimodal interaction where participants are a current user and the target object; and a message presenting module configured to present a second message from the virtual object in the interactive interface based on a first message from the current user, where the second message is generated based on reference information associated with the target object.

In a third aspect of the present disclosure, an electronic device is provided. The device includes at least one processing unit; and at least one memory coupled to the at least one processing unit and storing instructions executable by the at least one processing unit. The instructions, when executed by the at least one processing unit, cause the device to perform the method of the first aspect.

In a fourth aspect of the present disclosure, a computer-readable storage medium is provided. The computer-readable storage medium stores a computer program executable by a processor to perform the method of the first aspect.

It should be understood that the content described in this section is not intended to identify key or important features of the embodiments of the present disclosure, nor is it intended to limit the scope of the present disclosure. Other features of the present disclosure will become readily understood through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference symbols refer to the same or similar elements, where:
FIG. 1 shows a schematic diagram of an example environment in which the embodiments according to the present disclosure may be implemented;
FIG. 2A to FIG. 2C show example interfaces according to some embodiments of the present disclosure;
FIG. 3A to FIG. 3C show example interfaces according to some further embodiments of the present disclosure;
FIG. 4A to FIG. 4C show example interfaces according to some further embodiments of the present disclosure;
FIG. 5A and FIG. 5B show example interfaces according to some further embodiments of the present disclosure;
FIG. 6 shows an example interface according to some further embodiments of the present disclosure;
FIG. 7 shows a flowchart of an example interaction process according to some embodiments of the present disclosure;
FIG. 8 shows a schematic structural block diagram of an apparatus for interaction according to some embodiments of the present disclosure; and
FIG. 9 shows a block diagram of an electronic device capable of implementing multiple embodiments of the present disclosure.

### DETAILED DESCRIPTION

The embodiments of the present disclosure will be described in more detail below with reference to the drawings. Although some embodiments of the present disclosure are shown in the drawings, it should be understood that the present disclosure may be implemented in various forms, and should not be construed as limited to the embodiments set forth herein. Instead, these embodiments are provided for a more thorough and complete understanding of the present disclosure. It should be understood that the drawings and embodiments of the present disclosure are only used for illustrative purposes, and are not configured to limit the protection scope of the present disclosure.

It should be noted that the titles of any section/subsection provided herein are not restrictive. Various embodiments are described throughout this article, and any type of embodiment may be included under any section/subsection. In addition, the embodiments described in any section/subsection may be combined with any other embodiments described in the same section/subsection and/or different section/subsection in any way.

In the description of the embodiments of the present disclosure, the term "include/comprise" and similar terms should be understood as open-ended inclusion, that is, "include/comprise but not limited to". The term "based on" should be understood as "based at least in part on". The term "one embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve user data, data acquisition and/or use, etc. These aspects all follow the corresponding laws, regulations and related provisions. In the embodiments of the present disclosure, the acquisition, access, processing, machining, forwarding, use, etc. of all data are carried out on the premise that the user is aware of and confirms. Accordingly, when implementing the various embodiments of the present disclosure, the user should be informed of the type, range of use, use scenarios, etc. of the data or information that may be involved, and the authorization of the user should be obtained, through appropriate means in accordance with relevant laws and regulations. The specific means of informing and/or authorizing may vary according to the actual situation and application scenarios, and the scope of the present disclosure is not limited in this regard.

If the solutions in this specification and the embodiments involve personal information processing, the processing will be carried out on the premise that there is a legal basis (for example, the consent of the personal information subject is obtained, or it is necessary to perform a contract, etc.), and the processing will only be carried out within the scope of the provisions or agreements. If the user refuses to process personal information other than the necessary information required for the basic functions, it will not affect the user's use of the basic functions.

The Internet provides people with a variety of ways to interact. For example, people may interact with a live streamer through a live streaming room, and may also interact with other users through private messages. However, users may receive a large number of messages, and how to effectively ensure that the messages are processed in a timely and efficient manner is the focus of people's attention.

The embodiments of the present disclosure provide a solution for interaction. According to this solution, it is possible to present an interactive interface for a virtual object based on an interaction request associated with a target object, the virtual object corresponds to the target object, and the interactive interface is configured to provide a multimodal interaction where participants are a current user and the target object. Further, a second message from the virtual object may be presented in the interactive interface based on a first message from the current user, where the second message is generated based on reference information associated with the target object.

In this way, the embodiments of the present disclosure are able to provide the user with a space for multimodal one-to-one interaction with the virtual object, thereby improving interaction efficiency.

Various example implementations of this solution will be described in detail below in further conjunction with the drawings.

### Example Environment

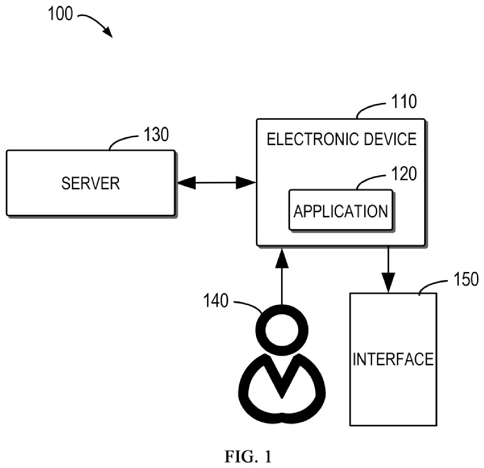

FIG. 1 shows a schematic diagram of an example environment 100 in which the embodiments of the present disclosure may be implemented. As shown in FIG. 1, the example environment 100 may include an electronic device 110.

In this example environment 100, the electronic device 110 may run an application 120 supporting interface interaction. The application 120 may be any appropriate type of application for interface interaction, examples of which may include but are not limited to: a video application, a social application, or other appropriate applications. A user 140 may interact with the application 120 via the electronic device 110 and/or its attached devices.

In the environment 100 of FIG. 1, if the application 120 is active, the electronic device 110 may present an interface 150 for supporting interface interaction through the application 120.

In some embodiments, the electronic device 110 communicates with a server 130 to implement provision of services of the application 120. The electronic device 110 may be any type of mobile terminal, fixed terminal or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (Personal Communication System, PCS) device, a personal navigation device, a personal digital assistant (Personal Digital Assistant, PDA), an audio/video player, a digital camera/video camera, a positioning device, a television receiver, a radio broadcast receiver, an e-book device, a game device, or any combination of the foregoing, including fittings and peripherals of these devices or any combination thereof. In some embodiments, the electronic device 110 may also support any type of user-specific interface (such as "wearable" circuitry, etc.).

The server 130 may be an independent physical server, a server cluster or distributed system composed of multiple physical servers, or may be a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and so on. The server 130 may provide background services for the application 120 supporting virtual scenes in the electronic device 110.

A communication connection may be established between the server 130 and the electronic device 110. The communication connection may be established in a wired or wireless manner. The communication connection may include but be not limited to a Bluetooth connection, a mobile network connection, a Universal Serial Bus (USB) connection, a Wireless Fidelity (WiFi) connection, etc., and the embodiments of the present disclosure are not limited in this regard. In the embodiments of the present disclosure, the server 130 and the electronic device 110 may implement signaling interaction through the communication connection therebetween.

It should be understood that the structures and functions of various elements in the environment 100 are described for illustrative purposes only, without suggesting any limitation to the scope of the present disclosure.

Some example embodiments of the present disclosure will be described below with continued reference to the drawings.

### Example Interaction

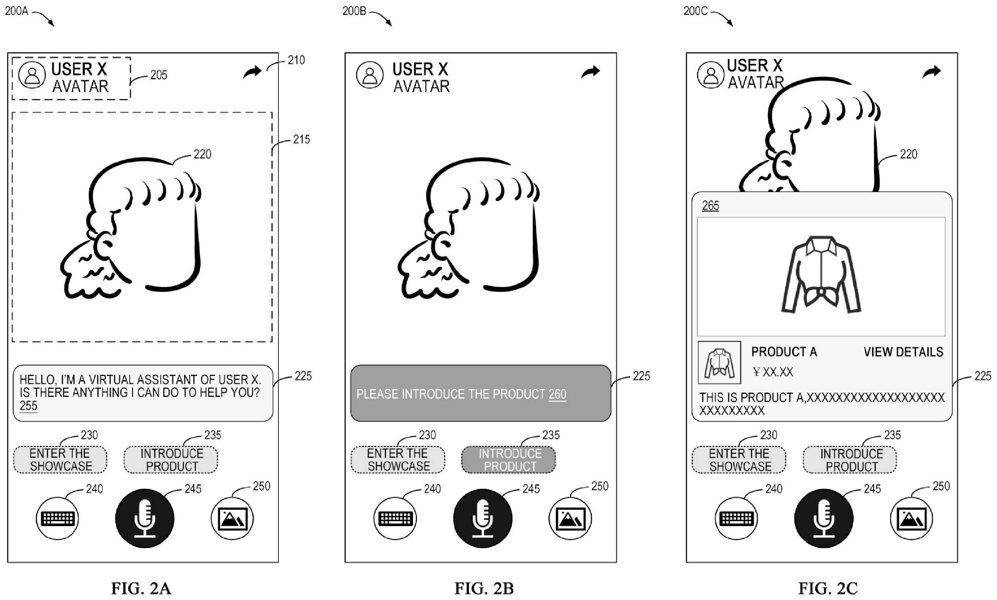

An example interaction process according to the embodiments of the present disclosure will be described below in conjunction with FIG. 2A to FIG. 6.

Reference is made to FIG. 2A to FIG. 2C first. FIG. 2A to FIG. 2C show example interfaces 200A to 200C according to some embodiments of the present disclosure. The interfaces 200A to 200C may be provided by the electronic device 110 as shown in FIG. 1.

The interface 200A shown in FIG. 2A may correspond to an interactive interface between a current user and a virtual object. In some embodiments, the electronic device 110 may present the interface 200A as shown in FIG. 2A based on an interaction request associated with a target object from the current user, for interaction between the current user and the virtual object corresponding to the target object.

In some embodiments, the target object may include an appropriate user object in the platform, such as "User X". In some embodiments, the electronic device 110, for example, may provide an access entry for accessing the interface 200A in an interface associated with the target object.

For example, the electronic device 110 may provide an access entry for accessing the interface 200A in the target object's personal homepage or a viewing interface of his/her works. Further, the electronic device 110 may receive the user's access request based on the user's selection of the access entry, and present the interface 200A accordingly.

As shown in FIG. 2A, the interface 200A may include an information display area 205 for displaying information associated with the virtual object. As shown in FIG. 2A, the information display area 205 may be configured to display identification information of the target object (e.g., User X) corresponding to the virtual object, such as text identification (e.g., username) and/or image identification (e.g., avatar).

In some embodiments, the electronic device 110 may further receive, for example, the user's selection of the identification information or the information display area 205, and further display description information of the virtual object. Such description information may include, but is not limited to: a nickname of the virtual object, a profile of the virtual object, a type of the virtual object, etc.

In some embodiments, at least a portion of the description information may be determined based on a configuration operation of the target object. For example, the target object (e.g., User X) may customize the nickname of the corresponding virtual object.

In some embodiments, the information display area 205 may further display type information of the virtual object. In some embodiments, the type information may indicate that the virtual object is created based on a portrait of a first target user, where the first target user may be the target object who publishess the virtual object.

In some embodiments, the type information may indicate that the virtual object is created based on a virtual character, and the virtual character may be a target object corresponding to an animation model portrait created by a second target user. In some scenarios, the virtual object is also referred to as a virtual character.

Additionally, the interface 200A may further include a sharing entry 210 to support the user to share the virtual object to other users. Other users may access the interactive interface for the virtual object, for example, based on access to the received shared content.

Continuing to refer to FIG. 2A, the interface 200A may further include, for example, a portrait display area 215 for displaying a visual element 220 corresponding to the virtual object. The visual element may include, for example, but is not limited to: a two-dimensional image, a three-dimensional image, a three-dimensional model, etc.

In some embodiments, the visual element 220 may be created based on a configuration operation of the target object. For example, the user may upload a picture or take a photo to create the visual element 220 corresponding to the virtual object.

Alternatively, the visual element 220 may also be generated based on a visual resource associated with the target object. For example, the corresponding visual element 220 may be automatically generated based on the user's avatar.

In some embodiments, the interface 200A further includes a message display area 225. The message display area 225 may be configured to display a message from the current user or a message from the virtual object. Taking FIG. 2A as an example, the message display area 225 may display the content of the message 255 from the virtual object.

Continuing to refer to FIG. 2, the interface 200A may further provide multiple controls for interacting with the virtual object. Specifically, the interface 200A may include a group of candidate interaction items, such as a candidate interaction item 230 and a candidate interaction item 235.

Further, the electronic device 110 may receive the selection for the interaction item 235 to obtain the first message corresponding to the interaction item 235 as the message sent by the current user to the virtual object.

Specifically, as shown in FIG. 2B, the electronic device 110 may display the content of the first message 260 corresponding to the interaction item 235 in the message display area 225 based on the user's selection for the interaction item 235.

Further, as shown in FIG. 2C, in the interface 200C, the electronic device 110 may provide a second message 265 from the virtual object as a reply to the first message 260.

In some embodiments, the second message 265 may be generated based on the first message 260. As an example, the electronic device 110 may generate the corresponding second message 265 by using any appropriate machine learning model (for example, a language model).

In some embodiments, the generation of the second message 265 may also be based on the reference information associated with the target object (e.g., User X). The reference information may include, for example, description information about a group of target resources associated with the target object. For example, with the knowledge and permission of the target object, the target object may upload or select a group of resources for training the model corresponding to the virtual object, such that it may have corresponding knowledge, language style and/or tone.

In some embodiments, the group of target resources associated with the target object may include work resources. For example, the target object may train or fine-tune the model by selecting one or more published works, such that the model may generate replies to the messages input by the user by referring to the one or more works.

In some embodiments, the group of target resources associated with the target object may include product resources. As an example, when the target object is selling a specific product or promoting a specific product, the target object may provide information about these products to the model for training or fine-tuning the model, so that the model may generate replies to the messages input by the user by referring to the product information.

In some embodiments, as shown in FIG. 2C, the electronic device 110 may display target content corresponding to the second message 265 in the message display area 225. As an example, the second message 265 may include various types of content, such as text content, picture content, video content, audio content, link content, etc.

Accordingly, text content, picture content, video content, link content, etc. may be presented in the message display area 225, and the corresponding audio content may be, for example, played by the electronic device 110. For example, the electronic device 110 may provide audio content corresponding to the second message 265 while presenting the target content of the second message 265.

Taking FIG. 2C as an example, the target content presented in the message display area 225 may include, for example, text content, picture content, and link content of a product. The electronic device 110 may, for example, further present a page corresponding to the link content (such as a product purchase page) based on the selection of the link content.

In some embodiments, when displaying the second message, the electronic device 110 may further control the visual element 220 to display a corresponding effect. For example, the electronic device 110 may drive the visual element 220 to perform corresponding movements based on the text content of the second message, such as mouth movements, facial expression changes, etc. The present disclosure is not intended to limit the way of driving the visual element 220.

Continuing to refer to FIG. 2A, for example, the candidate interaction item 230 may correspond to a specific link. Upon receiving the selection of the candidate interaction item 230, the electronic device 110 may display a window or page corresponding to the specific link. For example, taking FIG. 2A as an example, the candidate interaction item 230 may be configured to lead to a display page of a group of products associated with the target object.

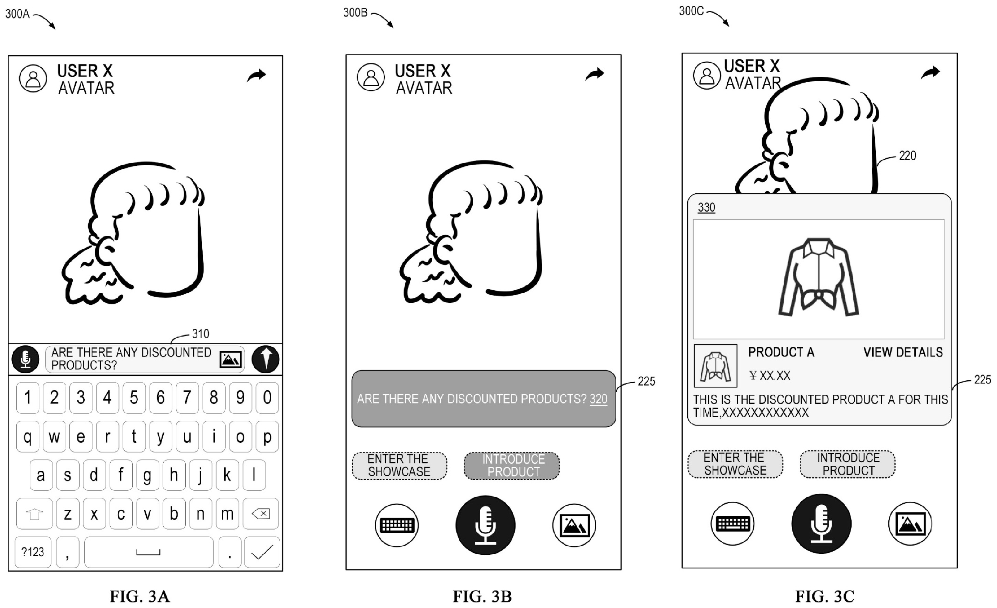

Continuing to refer to FIG. 2A, in some embodiments, the interface 200A may further provide a first interactive entry 240. In response to receiving the selection for the first interactive entry 240, the electronic device 110 may display the interface 300A as shown in FIG. 3A.

As shown in FIG. 3A, the electronic device 110 may provide an input bar 310 in the interface 300A. The electronic device 110 may receive the first message input by the user via the input bar 310. For example, the user may input the first message through a keyboard input control, an audio input control, and/or a picture input control in the input bar 310.

Further, as shown in FIG. 3B, after the user completes the input of the first message and selects to send it, the electronic device 110 may display the content of the first message 320 in the message display area 225.

Accordingly, as shown in FIG. 3C, the electronic device 110 may display the content of a second message 330 from the virtual object in the message display area 225. Similarly, the electronic device 110 may further drive the visual element 220 to perform corresponding movements based on the second message 330, and for example, may further provide audio content corresponding to the second message 330.

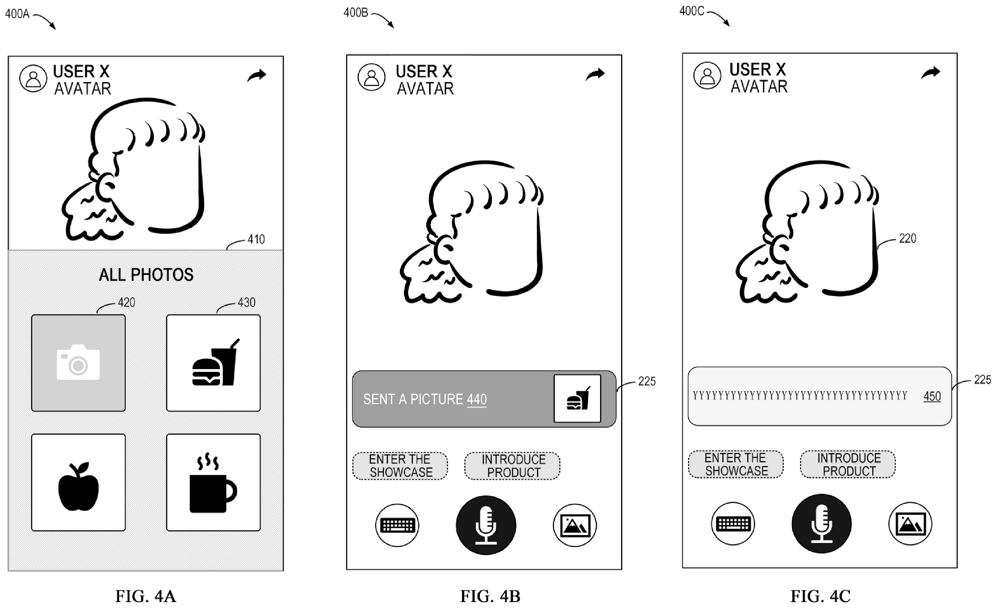

Continuing to refer to FIG. 2A, in some embodiments, the interface 200A may further provide a second interactive entry 250. In response to receiving the selection of the second interactive entry 250, the electronic device 110 may display the interface 400A as shown in FIG. 4A.

As shown in FIG. 4A, the electronic device 110 may provide an image input control 410 in the interface 400A. The electronic device 110 may receive an image message input via the image input control 410 as the first message sent to the virtual object.

For example, the user may use a shooting control in the image input control 410 to shoot a new image, such as a picture or a video, as the first message. As another example, the user may also select an existing picture or video (e.g., the picture 430) as the first message sent to the virtual object.

Further, as shown in FIG. 4B, after the user completes the input of the first message and selects to send it, the electronic device 110 may display the content of the first message 440 in the message display area 225. The content may include a preview of the selected image message and a corresponding text description.

Accordingly, as shown in FIG. 4C, the electronic device 110 may display the content of a second message 450 from the virtual object in the message display area 225. Similarly, the electronic device 110 may further drive the visual element 220 to perform corresponding movements based on the second message 450, and for example, may further provide audio content corresponding to the second message 450.

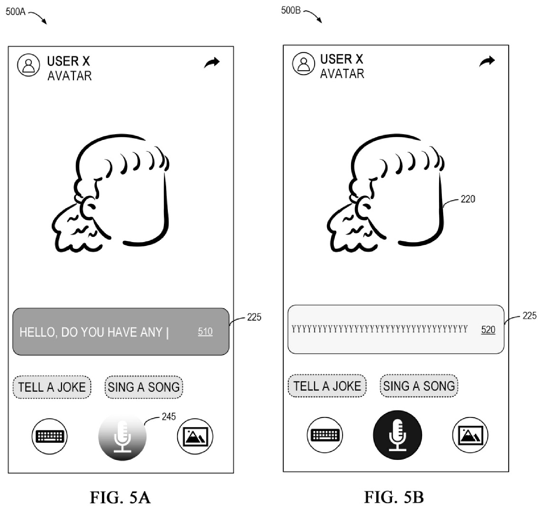

Continuing to refer to FIG. 2A, in some embodiments, the interface 200A may further provide a third interactive entry 245. In response to receiving the selection for the third interactive entry 245, the electronic device 110 may display the interface 500A as shown in FIG. 5A.

As shown in FIG. 5A, the electronic device 110 may receive an audio message input by the user based on the selection for the third interactive entry 245 as the first message. As shown in FIG. 5A, during the audio message reception, the electronic device 110 may further display text content 510 corresponding to the audio message in the message display area 225 substantially synchronously.

Further, as shown in FIG. 5C, after the user completes the input of the first message and selects to send it, the electronic device 110 may display the content of the second message 520 from the virtual object in the message display area 225. Similarly, the electronic device 110 may further drive the visual element 220 to perform corresponding movements based on the second message 520, and for example, may further provide audio content corresponding to the second message 520.

In some embodiments, the interface 200A may be configured to provide an interactive container (also referred to as an interactive space) for supporting the multimodal interaction between the current user and the virtual object, and the participants of the interactive container include only the current user and the virtual object.

Based on the interaction process described above, the embodiments of the present disclosure are able to provide the user with a space for multimodal one-to-one interaction with the virtual object, thereby improving interaction efficiency.

In some embodiments, for example, the message display area 225 as introduced above with reference to FIG. 2A to FIG. 5B may also be configured to trigger viewing of historical messages.

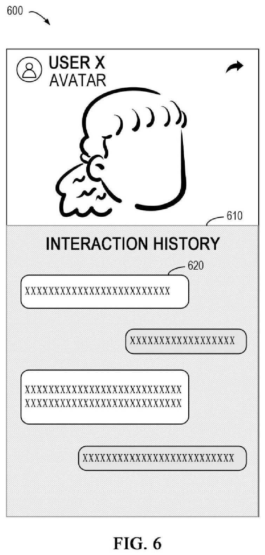

Specifically, the electronic device 110 may receive a preset operation for the message display area 225. Accordingly, as shown in FIG. 6, the electronic device 110 may present a message viewing window 610 for displaying a group of historical messages 620 between the current user and the virtual object.

In this way, the embodiments of the present disclosure are able to further facilitate the user to understand the interaction history with the virtual object, thereby improving the efficiency of message interaction.

### Example Process

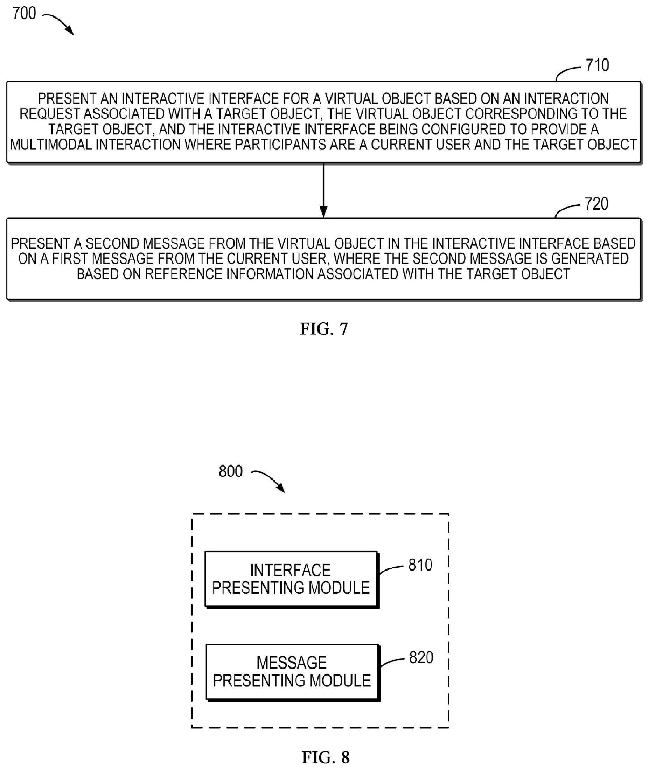

FIG. 7 shows a flowchart of an example interaction process 700 according to some embodiments of the present disclosure. The process 700 may be implemented at the electronic device 110. The process 700 will be described below with reference to FIG. 1.

As shown in FIG. 7, at block 710, the electronic device 110 presents an interactive interface for a virtual object based on an interaction request associated with a target object, the virtual object corresponding to the target object, and the interactive interface being configured to provide a multimodal interaction where participants are a current user and the target object.

At block 720, the electronic device 110 presents a second message from the virtual object in the interactive interface based on a first message from the current user, where the second message is generated based on reference information associated with the target object.

In some embodiments, the interactive interface presents a visual element corresponding to the virtual object.

In some embodiments, the visual element presents an effect corresponding to the second message.

In some embodiments, the interactive interface presents identification information of the target object, and the identification information includes a text identification and/or an image identification.

In some embodiments, the process 700 further includes: presenting description information about the virtual object based on a first preset operation for the identification information.

In some embodiments, at least a portion of the description information is determined based on a configuration operation of the target object.

In some embodiments, the interactive interface further includes type information for indicating the virtual object, and the type information indicates that: the virtual object is created based on a portrait of a first target user, the first target user being the target object who publishess the virtual object; or the virtual object is created based on a virtual character, and the virtual character is a target object corresponding to an animation model portrait created by a second target user.

In some embodiments, the interactive interface includes a message display area, and presenting the second message from the virtual object in the interactive interface includes: presenting target content corresponding to the second message in the message display area.

In some embodiments, the target content includes at least one of: text content; picture content; video content; or link content.

In some embodiments, the process 700 further includes: presenting a page corresponding to the link content based on a selection of the link content.

In some embodiments, the process 700 further includes: presenting a message viewing window based on a second preset operation on the message display area, the message viewing window displaying a group of historical messages between the current user and the virtual object.

In some embodiments, the process 700 further includes: providing audio content corresponding to the second message while presenting the target content.

In some embodiments, the reference information includes description information about a group of target resources associated with the target object.

In some embodiments, the group of target resources includes at least one of: work resources or product resources.

In some embodiments, the interactive interface includes a group of candidate interaction items, and the method further includes: obtaining the first message corresponding to a target interaction item based on a selection of the target interaction item from the group of candidate interaction items.

In some embodiments, the process 700 further includes: receiving a selection for a first interactive entry in the interactive interface, and presenting an input bar; and receiving the first message input via the input bar.

In some embodiments, the process 700 further includes: receiving a selection for a second interactive entry in the interactive interface, and presenting an image input control; and receiving an image message input via the image input control as the first message.

In some embodiments, the process 700 further includes: receiving a selection for a third interactive entry in the interactive interface, and receiving a voice message as the first message.

In some embodiments, the interactive interface is configured to provide an interactive container for supporting the multimodal interaction between the current user and the virtual object, and the participants of the interactive container are the current user and the virtual object.

### Example Apparatus and Device

The embodiments of the present disclosure further provide a corresponding apparatus for implementing the above method or procedure. FIG. 8 shows a schematic structural block diagram of an apparatus for interaction 800 according to some embodiments of the present disclosure. The apparatus 800 may be implemented as or included in the electronic device 110. Each module/component in the apparatus 800 may be implemented by hardware, software, firmware, or any combination thereof.

As shown in FIG. 8, the apparatus 800 includes an interface presenting module 810 configured to present an interactive interface for a virtual object based on an interaction request associated with a target object, the virtual object corresponding to the target object, and the interactive interface being configured to provide a multimodal interaction where participants are a current user and the target object; and a message presenting module 820 configured to present a second message from the virtual object in the interactive interface based on a first message from the current user, where the second message is generated based on reference information associated with the target object.

In some embodiments, the interactive interface presents a visual element corresponding to the virtual object.

In some embodiments, the visual element presents an effect corresponding to the second message.

In some embodiments, the interactive interface presents identification information of the target object, the identification information including a text identification and/or an image identification.

In some embodiments, the apparatus 900 further includes an object description module configured to present description information about the virtual object based on a first preset operation for the identification information.

In some embodiments, at least a portion of the description information is determined based on a configuration operation of the target object.

In some embodiments, the interactive interface further includes type information for indicating the virtual object, where the type information indicates that: the virtual object is created based on a portrait of a first target user, the first target user being the target object who publishess the virtual object; or the virtual object is created based on a virtual character, and the virtual character is a target object corresponding to an animation model portrait created by a second target user.

In some embodiments, the interactive interface includes a message display area, and the message presenting module 820 is further configured to: present target content corresponding to the second message in the message display area.

In some embodiments, the target content includes at least one of: text content; picture content; video content; or link content.

In some embodiments, the apparatus 800 further includes a page access module configured to present a page corresponding to the link content based on a selection of the link content.

In some embodiments, the apparatus 800 further includes a history viewing module configured to present a message viewing window based on a second preset operation on the message display area, the message viewing window displaying a group of historical messages between the current user and the virtual object.

In some embodiments, the apparatus 800 further includes an audio providing module configured to provide audio content corresponding to the second message while presenting the target content.

In some embodiments, the reference information includes description information about a group of target resources associated with the target object.

In some embodiments, the group of target resources includes at least one of: work resources or product resources.

In some embodiments, the interactive interface includes a group of candidate interaction items, and the method further includes: obtaining the first message corresponding to a target interaction item based on a selection of the target interaction item from the group of candidate interaction items.

In some embodiments, the apparatus 800 further includes a first input module configured to receive a selection for a first interactive entry in the interactive interface, and present an input bar; and receive the first message input via the input bar.

In some embodiments, the apparatus 800 further includes a second input module configured to receive a selection for a second interactive entry in the interactive interface, and present an image input control; and receive an image message input via the image input control as the first message.

In some embodiments, the apparatus 800 further includes a third input module configured to receive a selection for a third interactive entry in the interactive interface, and receive a voice message as the first message.

In some embodiments, the interactive interface is configured to provide an interactive container for supporting the multimodal interaction between the current user and the virtual object, and the participants of the interactive container are the current user and the virtual object.

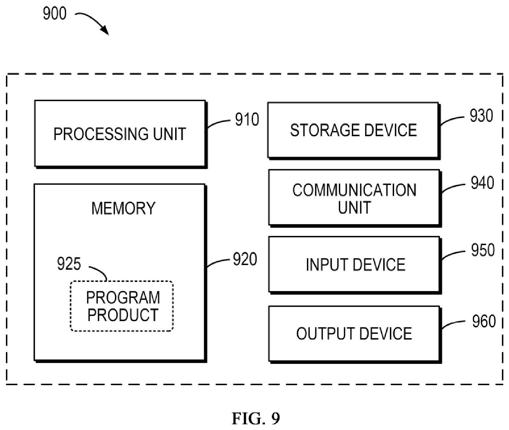

FIG. 9 shows a block diagram of an electronic device 900 in which one or more embodiments of the present disclosure may be implemented. It should be understood that the electronic device 900 shown in FIG. 9 is merely illustrative and should not constitute any limitation to the functions and scope of the embodiments described herein. The electronic device 900 shown in FIG. 9 may be configured to implement the electronic device 110 of FIG. 1.

As shown in FIG. 9, the electronic device 900 is in the form of a general electronic device. The components of the electronic device 900 may include but are not limited to one or more processors or processing units 910, a memory 920, a storage device 930, one or more communication units 940, one or more input devices 950, and one or more output devices 960. The processing unit 910 may be an actual or virtual processor and may perform various processing according to the program stored in the memory 920. In a multi-processor system, multiple processing units execute computer executable instructions in parallel to improve the parallel processing capability of the electronic device 900.

The electronic device 900 usually includes multiple computer storage media. Such media may be any available media accessible to the electronic device 900, including but not limited to volatile and non-volatile media, removable and non-removable media. The memory 920 may be a volatile memory (for example, a register, a cache, a random access memory (RAM)), a non-volatile memory (for example, a read-only memory (ROM), an electrically erasable programmable read-only memory (EEPROM), a flash memory), or any combination thereof. The storage device 930 may be a removable or non-removable medium, and may include a machine-readable medium such as a flash drive, a disk, or any other medium, which may be configured to store information and/or data and may be accessed within the electronic device 900.

The electronic device 900 may further include other removable/non-removable, volatile/non-volatile storage media. Although not shown in FIG. 9, a disk drive for reading from or writing to a removable, non-volatile disk (such as a "floppy disk"), and an optical disk drive for reading from or writing to a removable, non-volatile optical disk may be provided. In these cases, each drive may be connected to a bus (not shown) by one or more data medium interfaces. The memory 920 may include a computer program product 925 having one or more program modules configured to perform various methods or actions of the various embodiments of the present disclosure.

The communication unit 940 enables communication with other electronic devices through the communication medium. Additionally, the functions of the components of the electronic device 900 may be implemented by a single computing cluster or multiple computing machines, which may communicate through communication connections. Therefore, the electronic device 900 may use a logical connection with one or more other servers, a network personal computer (PC) or another network node to operate in a networked environment.

The input device 950 may be one or more input devices, such as a mouse, a keyboard, a tracking ball, etc. The output device 960 may be one or more output devices, such as a display, a speaker, a printer, etc. The electronic device 900 may further communicate with one or more external devices (not shown) through the communication unit 940 as needed, the external devices such as a storage device, a display device, etc., communicate with one or more devices that enable the user to interact with the electronic device 900, or communicate with any devices (for example, a network card, a modem, etc.) that enable the electronic device 900 to communicate with one or more other electronic devices. Such communication may be performed via input/output (I/O) interfaces (not shown).

According to an example implementation of the present disclosure, there is provided a computer-readable storage medium having computer executable instructions stored thereon, where the computer executable instructions are executed by a processor to implement the method described above. According to an example implementation of the present disclosure, there is further provided a computer program product tangibly stored on a non-transitory computer-readable medium and including computer executable instructions, where the computer executable instructions are executed by a processor to implement the method described above.

Various aspects of the present disclosure are described herein with reference to flowcharts and/or block diagrams of methods, apparatuses, devices and computer program products implemented according to the present disclosure. It should be understood that each block of the flowcharts and/or block diagrams, and combinations of blocks in the flowcharts and/or block diagrams, may be implemented by computer-readable program instructions.

These computer-readable program instructions may be provided to a processing unit of a general-purpose computer, a special-purpose computer or other programmable data processing apparatus to produce a machine, so that these instructions, when executed by the processing unit of the computer or other programmable data processing apparatus, produce an apparatus that implements the functions/actions specified in one or more blocks of the flowcharts and/or block diagrams. These computer-readable program instructions may also be stored in a computer-readable storage medium, and these instructions cause the computer, the programmable data processing apparatus and/or other devices to work in a specific way, so that the computer-readable medium storing the instructions includes a manufactured product, which includes instructions for implementing various aspects of the functions/actions specified in one or more blocks of the flowcharts and/or block diagrams.

The computer-readable program instructions may be loaded onto a computer, another programmable data processing apparatus, or other devices, so that a series of operation steps are performed on the computer, the other programmable data processing apparatus or other devices to produce a computer-implemented process, so that the instructions executed on the computer, the other programmable data processing apparatus, or other devices implement the functions/actions specified in one or more blocks of the flowcharts and/or block diagrams.

The flowcharts and block diagrams in the drawings show the architecture, functions, and operations of possible implementations of the system, method and computer program product according to multiple implementations of the present disclosure. In this regard, each block in the flowchart or block diagram may represent a module, program segment, or part of an instruction, and the module, program segment, or part of the instruction contains one or more executable instructions for implementing the specified logical functions. In some alternative implementations, the functions marked in the blocks may also occur in an order different from that marked in the drawings. For example, two consecutive blocks may actually be executed substantially in parallel, or they may sometimes be executed in the reverse order, depending on the functions involved. It should also be noted that each block in the block diagram and/or flowchart, and combinations of blocks in the block diagram and/or flowchart, may be implemented by a dedicated hardware-based system that performs the specified functions or actions, or may be implemented by a combination of dedicated hardware and computer instructions.

The implementations of the present disclosure have been described above, and the above description is illustrative, not exhaustive, and is not limited to the disclosed implementations. Without departing from the scope and spirit of the described implementations, many modifications and changes will be apparent to those of ordinary skill in the art. The choice of terms used herein is intended to best explain the principles, practical applications, or improvements to the technology in the market of the implementations, or to enable other ordinary technical personnel in the art to understand the implementations disclosed herein.

## Claims

1. A method for interaction, comprising:
presenting an interactive interface for a virtual object based on an interaction request associated with a target object, the virtual object corresponding to the target object, and the interactive interface being configured to provide a multimodal interaction where participants are a current user and the target object; and
presenting a second message from the virtual object in the interactive interface based on a first message from the current user, wherein the second message is generated based on reference information associated with the target object.

2. The method of claim 1, wherein the interactive interface presents a visual element corresponding to the virtual object.

3. The method of claim 2, wherein the visual element presents an effect corresponding to the second message.

4. The method of claim 1, wherein the interactive interface presents identification information of the target object, the identification information comprising a text identification and/or an image identification.

5. The method of claim 4, further comprising:
presenting description information about the virtual object based on a first preset operation for the identification information.

6. The method of claim 5, wherein at least a portion of the description information is determined based on a configuration operation of the target object.

7. The method of claim 1, wherein the interactive interface further comprises type information for indicating the virtual object, and wherein the type information indicates that:
the virtual object is created based on a portrait of a first target user, the first target user being the target object who publishess the virtual object; or
the virtual object is created based on a virtual character, and the virtual character is a target object corresponding to an animation model portrait created by a second target user.

8. The method of claim 1, wherein the interactive interface comprises a message display area, and presenting the second message from the virtual object in the interactive interface comprises:
presenting target content corresponding to the second message in the message display area.

9. The method of claim 8, wherein the target content comprises at least one of:
text content;
picture content;
video content; or
link content.

10. The method of claim 9, further comprising:
presenting a page corresponding to the link content based on a selection of the link content.

11. The method of claim 8, further comprising:
presenting a message viewing window based on a second preset operation on the message display area, the message viewing window displaying a group of historical messages between the current user and the virtual object.

12. The method of claim 8, further comprising:
providing audio content corresponding to the second message while presenting the target content.

13. The method of claim 1, wherein the reference information comprises description information about a group of target resources associated with the target object.

14. The method of claim 13, wherein the group of target resources comprises at least one of:
work resources, or
product resources.

15. The method of claim 1, wherein the interactive interface comprises a group of candidate interaction items, and the method further comprises:
obtaining the first message corresponding to a target interaction item based on a selection of the target interaction item from the group of candidate interaction items.

16. The method of claim 1, further comprising:
receiving a selection for a first interactive entry in the interactive interface, and presenting an input bar; and
receiving the first message input via the input bar.

17. The method of claim 1, further comprising:
receiving a selection for a second interactive entry in the interactive interface, and presenting an image input control; and
receiving an image message input via the image input control as the first message.

18. The method of claim 1, further comprising:
receiving a selection for a third interactive entry in the interactive interface, and receiving a voice message as the first message.

19. The method of claim 1, wherein the interactive interface is configured to provide an interactive container for supporting the multimodal interaction between the current user and the virtual object, and the participants of the interactive container are the current user and the virtual object.

20. An apparatus for interaction, comprising:
an interface presenting module configured to present an interactive interface for a virtual object based on an interaction request associated with a target object, the virtual object corresponding to the target object, and the interactive interface being configured to provide a multimodal interaction where participants are a current user and the target object; and
a message presenting module configured to present a second message from the virtual object in the interactive interface based on a first message from the current user, wherein the second message is generated based on reference information associated with the target object.

21. An electronic device, comprising:
at least one processing unit; and
at least one memory coupled to the at least one processing unit and storing instructions executable by the at least one processing unit, the instructions, when executed by the at least one processing unit, causing the electronic device to perform a method according to any of claims 1 to 18.

22. A computer-readable storage medium having a computer program stored thereon, the computer program being executable by a processor to perform a method according to any of claims 1 to 18.
